# FASCICULE DE BREVET EUROPEEN

(11) **EP 3 295 297 B1**
(45) Date de publication et mention de la délivrance du brevet: **14.10.2020**
(21) Numéro de dépôt: 16731207.3
(22) Date de dépôt: 10.05.2016
(51) Int. Cl.: G06F 7/02, G06F 21/52, H04L 9/00, G09C 1/00, G06F 11/14

(54) **PROCEDE DE SECURISATION D'UNE COMPARAISON DE DONNEES LORS DE L'EXECUTION D'UN PROGRAMME**
VERFAHREN ZUR SICHERUNG EINES VERGLEICHS VON DATEN WÄHREND DER AUSFÜHRUNG EINES PROGRAMMS
METHOD OF SECURING A COMPARISON OF DATA DURING THE EXECUTION OF A PROGRAM

(30) Priorité: 13.05.2015 FR 1554348
(43) Date de publication de la demande: 21.03.2018
(73) Titulaire: Rambus Inc., Sunnyvale, CA 94089 (US)
(72) Inventeur: DUPAQUIS, Vincent, 13120 Biver (FR); LE COCQUEN, Eric, 83470 Saint Maximin La Sainte Beaume (FR)
(74) Mandataire: de Roquemaurel, Bruno
(86) Numéro de dépôt international: PCT/FR2016/051090
(87) Numéro de publication internationale: WO 2016/181062

(56) Documents cités:
- EP-A1- 1 538 509
- FR-A1- 3 007 552
- US-A- 5 621 909

## Description

La présente invention concerne le contrôle de l'exécution d'un programme par un processeur, notamment pour protéger le programme contre une modification ou une altération, durant son exécution. La présente invention s'applique en particulier aux parties d'un programme relatives à des prises de décisions critiques, effectuées sur la base de comparaisons de données.

Les circuits intégrés sécurisés, comme les circuits intégrés pour cartes à puce, font l'objet de diverses attaques de la part de fraudeurs qui cherchent à découvrir leur structure et/ou les secrets qu'ils mémorisent ou manipulent. Il s'agit par exemple de circuits de cryptographie, ou de microprocesseurs programmés pour exécuter des algorithmes de cryptographie.

Certaines méthodes de piratage consistent à injecter des erreurs dans un circuit intégré pour perturber l'exécution d'opérations dites sensibles, par exemple des opérations d'authentification ou des opérations d'exécution d'un algorithme de cryptographie.

De telles attaques, appelées attaques par injection de faute ou d'erreur, peuvent intervenir pendant des phases de calculs dits sensibles, par exemple pendant des phases de calcul d'un code d'identification ou pendant la lecture d'une clé de cryptographie dans une mémoire. Elles permettent, en combinaison avec des modèles mathématiques et à partir de résultats intentionnellement faux, grâce aux perturbations appliquées au circuit intégré, de déterminer un élément secret comme une clé secrète ou un mot de passe, ou de déduire la structure d'un algorithme de cryptographie.

En particulier, les attaques localisées consistent à introduire des perturbations (glitches) en un point déterminé du circuit, par exemple au moyen d'un faisceau laser ou un faisceau de rayons X. Une attaque localisée peut concerner par exemple la tension d'alimentation, un chemin de données ou d'adresse, ou le signal d'horloge du circuit intégré.

De telles attaques peuvent permettre notamment de déclencher une opération critique normalement exécutée à la suite d'une comparaison de données (par exemple une comparaison de données d'identification ou d'authentification avec des valeurs attendues). Par une telle attaque, une comparaison de données peut être perturbée lors de la lecture en mémoire des données à comparer, lors de la comparaison proprement-dite, ou lors de la prise de décision et du saut d'instruction pour atteindre les instructions à exécuter en fonction du résultat de la comparaison. L'attaque peut porter également sur l'adresse de lecture d'une des données à comparer, et donc provoquer une erreur de comparaison. L'attaque peut aussi porter sur l'adresse de lecture de la mémoire programme, et donc provoquer un saut en l'absence de tout code d'instruction de saut, si bien qu'une opération critique peut être déclenchée sans que l'instruction de comparaison conditionnant l'exécution de l'opération critique soit exécutée.

Le document FR3007552A1 divulgue un procédé de sécurisation de l'exécution d'un programme par un processeur, le programme comprenant une opération de comparaison de deux données, suivie d'une opération du programme sélectionnée en fonction d'un résultat de la comparaison. De plus, une deuxième donnée de comparaison représentative de l'égalité des données à comparer est calculée en utilisant la même opération de comparaison avec des opérandes inversés et un signal d'erreur est activé si les deux données de comparaison sont incohérentes.

Il est donc souhaitable de pouvoir améliorer la sécurisation de la comparaison de données dans un programme exécuté par un processeur, et de vérifier la prise de décision résultant d'une telle comparaison.

Il peut être également souhaitable de pouvoir atteindre ce but en utilisant le moins possible les ressources du processeur exécutant le programme, et sans augmenter les tâches de programmation nécessaires à la réalisation du programme.

Des modes de réalisation concernent un procédé de sécurisation de l'exécution d'un programme par un processeur, le programme comprenant une instruction de comparaison de deux données, suivie d'une opération du programme sélectionnée en fonction d'un résultat de comparaison fourni par l'instruction de comparaison, le procédé comprenant des étapes consistant à : avant l'exécution de l'instruction de comparaison, calculer de différentes manières des données de comparaison représentatives de l'égalité des données à comparer, après l'exécution de l'instruction de comparaison, vérifier si les données de comparaison calculées sont cohérentes avec le fait que l'opération soit sélectionnée ou non sélectionnée, et activer un signal d'erreur si les données de comparaison sont incohérentes entre elles ou avec le résultat de la comparaison.

Selon un mode de réalisation, le programme comprend une série d'instructions exécutées après l'instruction de comparaison, quel que soit le résultat de la comparaison, le procédé comprenant, durant l'exécution de la série d'instructions, une étape de vérification de la cohérence entre les données de comparaison et le fait que l'opération soit sélectionnée ou non sélectionnée en fonction du résultat de la comparaison.

Selon un mode de réalisation, l'instruction de comparaison est suivie de deux opérations du programme sélectionnées respectivement si l'instruction de comparaison détermine que les données à comparer sont identiques, et si l'instruction de comparaison détermine que les données à comparer sont différentes, l'exécution de l'une ou l'autre des deux opérations du programme étant suivie d'une vérification de la cohérence entre les données de comparaison calculées et l'opération sélectionnée en fonction du résultat de la comparaison.

Selon un mode de réalisation, les données de comparaison comprennent au moins deux des données de comparaison suivantes : une première donnée binaire de comparaison dont la valeur est fonction de l'égalité des données à comparer, une seconde donnée binaire de comparaison égale à une combinaison des bits d'un premier mot binaire résultant d'une opération logique OU, le premier mot binaire résultant d'une combinaison bit par bit des données à comparer par une opération logique OU Exclusif, une troisième donnée binaire de comparaison égale à une combinaison des bits d'un second mot binaire résultant d'une opération logique ET, le second mot binaire résultant d'une combinaison bit par bit par une opération logique OU d'une des données à comparer avec le complément binaire à un de l'autre des données à comparer, et une quatrième donnée binaire de comparaison égale à une combinaison des bits d'un troisième mot binaire résultant d'une opération logique OU, le troisième mot binaire résultant d'une combinaison bit par bit par une opération logique ET d'une des données à comparer avec le complément binaire à un de l'autre des données à comparer.

Selon un mode de réalisation, au moins l'une des données à comparer est lue dans une mémoire à chaque calcul d'une donnée de comparaison.

Selon un mode de réalisation, le procédé comprend l'activation d'au moins un indicateur parmi un premier indicateur si les données comparées sont identiques et un second indicateur si les données comparées sont différentes.

Selon un mode de réalisation, les données à comparer sont des blocs de plusieurs mots, chaque mot d'un des blocs à comparer étant comparé individuellement avec un mot correspondant de l'autre des blocs à comparer, le procédé comprenant une étape de comptage du nombre de mots égaux entre les deux blocs à comparer, l'instruction de comparaison comparant le nombre de mots égaux entre les deux blocs à comparer au nombre de mots dans chaque bloc à comparer.

Selon un mode de réalisation, le procédé comprend des étapes de comptage du nombre de mots différents entre les deux blocs à comparer, et de vérification que la somme du nombre de mot égaux et du nombre de mots différents entre les deux blocs à comparer est égale au nombre de mots dans chaque bloc à comparer.

Selon un mode de réalisation, les données à comparer sont des blocs de plusieurs mots, chaque mot d'un des blocs à comparer étant comparé individuellement avec un mot correspondant de l'autre des blocs à comparer, le procédé comprenant des étapes de calcul d'une somme des mots de chaque bloc à comparer, l'instruction de comparaison comparant les sommes des mots de chaque bloc à comparer.

Selon un mode de réalisation, une première des sommes de mots d'un des blocs à comparer inclut des valeurs successives d'un compteur des mots du bloc, le procédé comprenant des étapes de calcul de la somme des valeurs successives du compteur de mots à partir du nombre de mots dans chaque bloc à comparer et de modification de la première somme en lui retranchant la somme calculée des valeurs successives du compteur de mots.

Des modes de réalisation comprennent également un circuit de sécurisation de l'exécution d'un test dans un programme exécuté par un processeur, le circuit étant configuré pour mettre en œuvre le procédé de sécurisation précédemment défini.

Des modes de réalisation comprennent également un produit-programme informatique comprenant des instructions qui lorsqu'elles sont exécutées par un processeur mettent en œuvre le procédé précédemment défini.

Des exemples de réalisation de l'invention seront décrits dans ce qui suit, à titre non limitatif en relation avec les figures jointes parmi lesquelles :
la figure 1 représente schématiquement un exemple de calculateur pouvant mettant en œuvre un procédé de sécurisation de l'exécution d'une comparaison de données, selon un mode de réalisation,
les figures 2A, 2B représentent des organigrammes d'une partie de programme, comprenant une comparaison de données, respectivement sans et avec mise en œuvre d'un procédé de sécurisation, selon un mode de réalisation,
les figures 3A, 3B représentent des organigrammes d'une partie de programme comprenant une comparaison de données, respectivement sans et avec mise en œuvre du procédé de sécurisation, selon un autre mode de réalisation,
les figures 4A, 4B représentent des organigrammes d'une partie de programme comprenant une comparaison de données, respectivement sans et avec mise en œuvre du procédé de sécurisation, selon un autre mode de réalisation,
les figures 5A à 5D représentent des organigrammes de séquences d'étapes de comparaison de données, selon plusieurs modes de réalisation,
Les figures 6A, 6B représentent des organigrammes de séquences de contrôle de la prise de décision à la suite d'une comparaison, selon des modes de réalisation,
les figures 7 et 8 représentent des organigrammes de séquences de comparaison de deux blocs de données, selon divers modes de réalisation,
La figure 9 représente schématiquement un microcircuit ou un coprocesseur configuré pour sécuriser une opération de comparaison et de prise de décision, selon un mode de réalisation.

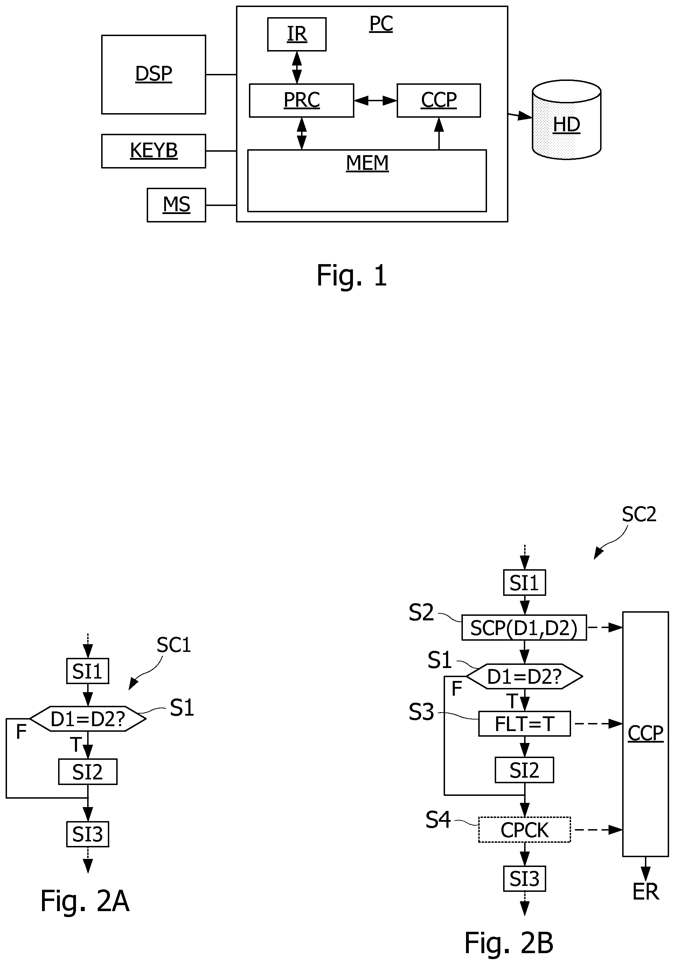

La figure 1 représente un dispositif électronique PC adapté à la mise en œuvre d'un procédé de sécurisation d'une prise de décision en fonction d'une comparaison de données, selon un mode de réalisation. Le dispositif PC comprend une mémoire MEM mémorisant un programme et des données, et un processeur PRC configuré pour exécuter un programme. Le dispositif peut comprendre des organes matériels comme des organes d'entrée/sortie comprenant une interface de commande d'utilisateur, et des circuits de communication ou d'interface réseau IR. L'interface de commande peut ainsi comprendre un écran d'affichage DSP, un ou plusieurs organes d'entrée comme une souris MS et un clavier KEYB, et/ou d'autres organes périphériques d'entrée/sortie comme une surface tactile, ainsi qu'une mémoire externe HD telle qu'un disque dur. Le dispositif électronique PC peut être un ordinateur ou tout autre dispositif comportant un processeur exécutant un programme, tel qu'un téléphone intelligent (smartphone), une tablette numérique, un microcircuit de carte à puce, ou un élément sécurisé (secure element). Le dispositif électronique peut être également un composant embarqué dans un système tel qu'un système sur puce SoC (System on Chip) ou une partie d'un circuit intégré.

Selon un mode de réalisation, le dispositif PC comprend un microcircuit CCP tel qu'un coprocesseur, connecté au processeur PRC, et configuré pour offrir au processeur PRC des fonctions permettant de sécuriser l'exécution d'une opération de comparaison, et de sécuriser la prise de décision effectuée à la suite de l'opération de comparaison.

Les figures 2A, 2B représentent des parties de programme SC1, SC2 exécutées par le processeur PRC et comprenant des séries d'instructions SI1, SI2, SI3 et une opération de comparaison de données S1. L'opération de comparaison S1 est exécutée entre les séries d'instructions SI1 et SI3. L'opération de comparaison S1 compare des données D1 et D2 et exécute la série d'opérations SI2 si les données D1 et D2 sont identiques. Autrement dit, si les données D1 et D2 sont identiques, les séries d'instructions SI1, SI2 et SI3 sont exécutées, sinon seules les séries d'instructions SI1 et SI3 sont exécutées.

La partie de programme SC1 est classique, tandis que la partie de programme SC2 est sécurisée en prévoyant des étapes S2 et S3 supplémentaires, selon un mode de réalisation. L'étape S2 qui est exécutée avant l'opération de comparaison S1, appelle une fonction de comparaison sécurisée SCP en lui fournissant les données à comparer D1, D2, ou les adresses respectives de ces dernières. L'étape S3 est exécutée si l'opération de comparaison S1 détermine que les données D1 et D2 sont identiques. L'étape S3 active un indicateur FLT mémorisant que le processeur PRC a exécuté la branche de programme exécutée si les données D1 et D2 sont identiques. L'activation de l'indicateur FLT est suivie d'opérations de vérification de la cohérence entre les résultats de comparaison des données D1 et D2, obtenus par la fonction SCP, et la prise de décision correspondant à cette comparaison. Si ces opérations de vérification détectent une incohérence, un signal d'erreur ER est activé.

Selon le contexte du programme, l'étape S3 peut être exécutée avant ou après la série d'instructions SI2, ou même après une partie seulement des instructions de la série SI2. Ainsi, l'étape S3 peut être exécutée avant une opération critique. L'étape S3 peut être configurée pour interrompre l'exécution du programme par le processeur PRC et/ou activer une fonction de gestion d'erreur, si la prise de décision ayant conduit à l'exécution de la série d'instructions SI2 est détectée erronée durant l'étape S3 (signal d'erreur ER actif). A noter que la fonction de gestion d'erreur peut être active sans que l'exécution normale du programme soit interrompue.

La série d'instructions SI3 qui est exécutée quel que soit le résultat de la comparaison effectuée à l'étape S1, peut être précédée d'une étape S4 d'appel d'une fonction CPCK de vérification de vérification de la bonne exécution du test. Par exemple, la fonction CPCK peut vérifier la cohérence entre l'état de l'indicateur FLT et les résultats fournis par la fonction de comparaison SCP et activer le signal d'erreur ER en cas de détection d'une incohérence. Si le cas où les données D1 et D2 sont différentes à l'étape S1 ne doit pas se produire, la fonction CPCK peut contrôler la valeur de l'indicateur FLT, et s'il n'est pas actif, la fonction CPCK peut activer le signal d'erreur ER.

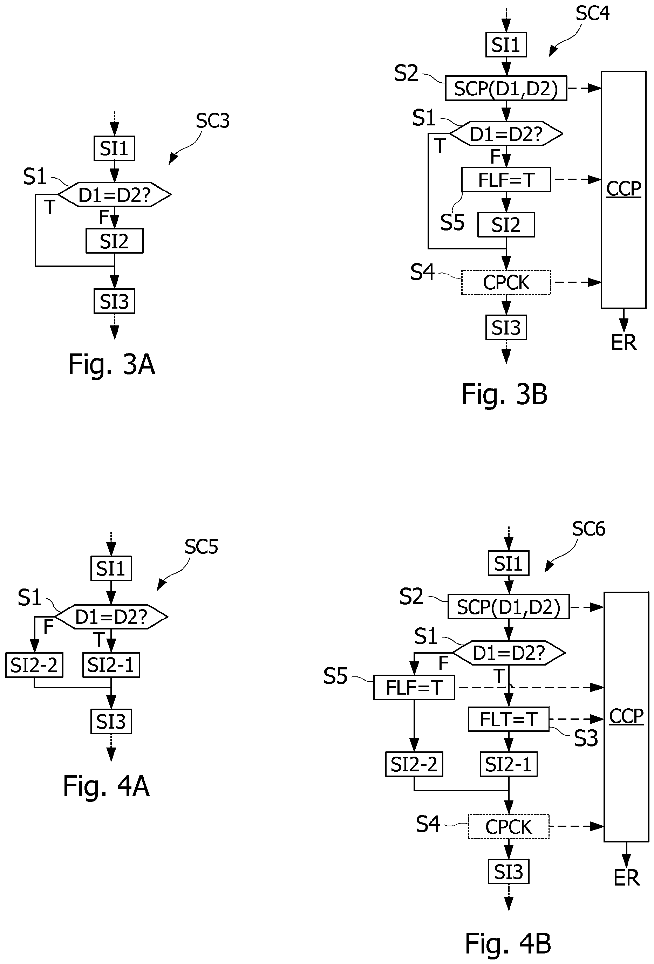

Les figures 3A, 3B représentent des parties de programme SC3, SC4 exécutées par le processeur PRC, et comprenant les séries d'instructions SI1, SI2, SI3 et l'opération de comparaison de données S1. L'opération de comparaison S1 est exécutée entre les séries d'instructions SI1 et SI3. L'opération de comparaison S1 compare des données D1 et D2 et exécute la série d'opérations SI2 si les données D1 et D2 sont différentes. Si les données D1 et D2 sont identiques, seules les séries d'instructions SI1 et SI3 sont exécutées, sinon les séries d'instructions SI1, SI2 et SI3 sont exécutées. La partie de programme SC3 est classique, tandis que la partie de programme SC4 est sécurisée, selon un mode de réalisation.

Les parties de programme SC3, SC4 diffèrent des parties de programme SC1, SC2 des figures 2A, 2B, en ce que l'opération SI2 est exécutée non pas lorsque les données D1 et D2 sont identiques, mais lorsqu'elles sont différentes. Sur la figure 3B, au lieu d'exécuter l'étape S3 lorsque les données sont identiques, une étape S5 est exécutée lorsque les données D1 et D2 sont différentes. L'étape S5 active un indicateur FLF mémorisant que le processeur PRC a exécuté la branche de programme exécutée si les données D1 et D2 sont différentes. L'activation de l'indicateur FLF est suivie d'opérations de vérification de la cohérence entre les résultats de la comparaison des données D1 et D2, obtenus par la fonction SCP, et la prise de décision correspondant à cette comparaison.

La partie de programme SC4 de la figure 3B peut également comprendre l'étape S4 d'appel de la fonction CPCK de vérification de la bonne exécution du test. Comme précédemment, la fonction CPCK peut vérifier la cohérence entre l'état de l'indicateur FLF et les résultats fournis par la fonction de comparaison SCP, et activer le signal d'erreur ER en cas de détection d'une incohérence. Si le cas où les données D1 et D2 sont identiques à l'étape S1 ne doit pas se produire, la fonction CPCK peut contrôler la valeur de l'indicateur FLF, et s'il n'est pas actif, la fonction CPCK peut activer un signal d'erreur ER.

Les figures 4A, 4B représentent des parties de programme SC5, SC6 exécutées par le processeur PRC, et comprenant les séries d'instructions SI1, SI3, ainsi que des séries d'instructions SI2-1, SI2-2 alternatives, remplaçant la série d'instructions SI2, et l'opération de comparaison de données S1. L'opération de comparaison S1 est exécutée entre les séries d'instructions SI1 et SI3. L'opération de comparaison S1 compare des données D1 et D2 et exécute la série d'opérations SI2-1 si les données D1 et D2 sont identiques et la série d'opérations SI2-2 si les données D1 et D2 sont différentes. Ainsi, si les données D1 et D2 sont identiques, les séries d'instructions SI1, SI2-1 et SI3 sont exécutées, sinon les séries d'instructions SI1, SI2-2 et SI3 sont exécutées. La partie de programme SC5 est classique, tandis que la partie de programme SC6 est sécurisée, selon un mode de réalisation.

Sur la figure 4B, avant l'opération de comparaison S1, la fonction de comparaison sécurisée SCP est appelée en lui fournissant les données à comparer D1, D2 ou les adresses respectives de ces dernières (étape S2). La branche exécutée lorsque les données D1 et D2 sont identiques comprend l'étape S3 d'activation de l'indicateur FLT, et la branche exécutée lorsque les données sont différentes comprend l'étape S5 d'activation de l'indicateur FLF. Ici encore, les étapes S3 et S5 peuvent être exécutées avant ou après les séries d'instructions SI2-1, SI2-2, respectivement, ou même après une partie seulement des instructions des séries SI2-1, SI2-2. De préférence, l'étape S3 et/ou l'étape S5 est (sont) exécutée(s) avant une opération critique. Comme précédemment, les étapes S3 et S5 peuvent être configurées pour interrompre l'exécution du programme par le processeur PRC, si la prise de décision ayant conduit à l'exécution de la série d'instructions SI2-1 ou SI2-2 est détectée erronée durant l'étape S3 ou S5 (signal d'erreur ER actif).

La série d'instructions SI3 exécutée quel que soit le résultat de la comparaison effectuée à l'étape S1, peut être précédée de l'étape S4 d'appel de la fonction CPCK de vérification de la bonne exécution du test. Ainsi, la fonction CPCK peut vérifier par exemple qu'un et un seul des indicateurs FLF, FLT est actif. A noter que cette vérification peut également être effectuée dans le cas des parties de programme SC2 (figure 2B) et SC4 (figure 3B).

Selon un mode de réalisation, les fonctions exécutées aux étapes S2, S3, S4 et S5 sont mises en œuvre par le circuit CCP. Dans ce cas, le signal d'erreur ER est transmis par le circuit CCP au processeur PRC.

Bien entendu, le passage dans les branches sans instruction des organigrammes des figures 2B et 3B peut également être contrôlé en prévoyant une étape S5 dans cette branche de l'organigramme de la figure 2B, et une étape S3 dans cette branche de l'organigramme de la figure 3B.

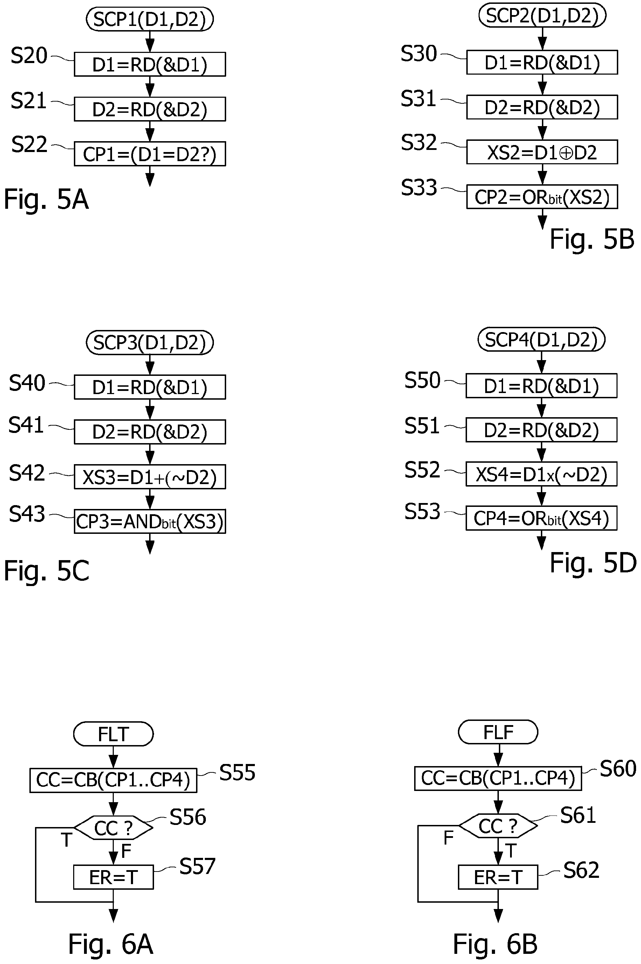

Les figures 5A à 5D représentent des exemples de séquences de comparaison SCP1, SCP2, SCP3, SCP4 de deux données D1, D2, susceptibles d'être exécutées par la fonction de comparaison sécurisée SCP appelée à l'étape S2. Sur la figure 5A, la séquence de comparaison SCP1 comprend des étapes S20 à S22. Aux étapes S20 et S21, les données à comparer D1 et D2 sont lues en mémoire à des adresses respectives &D1 et &D2. A l'étape S22, une variable booléenne CP1 est calculée sur la base d'une comparaison directe entre les données D1 et D2 lues en mémoire aux étapes S20 et S21. Par exemple, la donnée de comparaison vaut 1 (ou True) si les données D1 et D2 sont identiques, et 0 (ou False) dans le cas contraire.

Sur la figure 5B, la séquence de comparaison SCP2 comprend des étapes S30 à S33. Aux étapes S30 et S31, les données à comparer D1 et D2 sont lues en mémoire à leurs adresses respectives &D1 et &D2. A l'étape S32, les données D1 et D2 lues en mémoire aux étapes S30 et S31 sont combinées entre elles, par une opération logique de combinaison bit par bit OU Exclusif (XOR). A l'étape S33, les bits du résultat XS2 fourni par l'opération XOR sont combinés entre eux par une opération logique OU. Le résultat de cette combinaison est attribué à la variable booléenne CP2. De cette manière, si les données D1 et D2 sont identiques, le résultat XS2 vaut 0, et donc la variable CP2 vaut 0 (ou False). Au contraire, si les données D1 et D2 diffèrent entre elles par au moins un bit, le résultat XS2 est différent de 0, et donc la variable CP2 vaut 1 (ou True).

Sur la figure 5C, la séquence de comparaison SCP3 comprend des étapes S40 à S43. Aux étapes S40 et S41, les données à comparer D1 et D2 sont lues en mémoire à leurs adresses respectives &D1 et &D2. A l'étape S42, les données D1 et D2 lues en mémoire aux étapes S40 et S41 sont combinées entre elles, bit par bit, par une opération logique OU combinant la donnée D1 avec le complément binaire à un (-D2) de la donnée D2. A l'étape S43, les bits du résultat XS3 fourni par l'opération exécutée à l'étape S42 sont combinés entre eux par une opération logique ET. Le résultat de cette combinaison est attribué à par la variable booléenne CP3. De cette manière, si les données D1 et D2 sont identiques, le résultat XS3 vaut $FF...F (en hexadécimal, par exemple $FFFF dans le cas d'une donnée sur 16 bits), et donc la variable CP3 vaut 1 (ou True). En revanche, si les données D1 et D2 diffèrent entre elles par au moins un bit, le résultat XS3 n'est pas nécessairement différent de $FF...F, et donc la variable CP3 peut valoir 0 (ou False) ou 1.

Sur la figure 5D, la séquence de comparaison SCP4 comprend des étapes S50 à S53. Aux étapes S50 et S51, les données à comparer D1 et D2 sont lues en mémoire à leurs adresses respectives &D1 et &D2. A l'étape S52, les données D1 et D2 lues en mémoire aux étapes S50 et S51 sont combinées entre elles bit par bit, par une opération logique ET combinant la donnée D1 avec le complément binaire à un (-D2) de la donnée D2. A l'étape S53, les bits du résultat XS4 fourni par l'opération exécutée à l'étape S52 sont combinés entre eux par une opération logique OU. Le résultat de cette combinaison est attribué à la variable booléenne CP4. De cette manière, si les données D1 et D2 sont identiques, le résultat XS4 vaut 0, et donc la variable CP4 vaut 0 (ou False). En revanche, si les données D1 et D2 diffèrent entre elles par au moins un bit, le résultat XS4 n'est pas nécessairement différent de 0, et donc la variable CP4 peut valoir 0 ou 1.

Une combinaison des variables CP3 et CP4, par exemple, CP3 ET (∼CP4), permet de déterminer si les données D1 et D2 sont identiques ou non, (-CP4) représentant le complément à un de la variable CP4. Ainsi, la combinaison CP3 ET (-CP4) est équivalente à la variable CP1 ou CP2. D'autres variables de comparaison peuvent être calculées, par exemple en inversant les rôles des données D1 et D2 dans les séquences de comparaison SCP3 et SCP4.

Selon un mode de réalisation, plusieurs des séquences de comparaison SCP1-SCP4 sont exécutées à la suite d'un appel de la fonction SCP. Alternativement, toutes les séquences de comparaison sont exécutées pour obtenir les variables de comparaison CP1-CP4.

Selon un mode de réalisation, les valeurs des variables de comparaison calculées CP1-CP4 sont mémorisées séparément lors de l'exécution de la fonction SCP, et peuvent être combinées par des opérations logiques seulement au moment où elles sont contrôlées par les fonctions de vérification appelées aux étapes S3 et S5.

Il est à noter que chaque données D1 et D2 provenant d'une mémoire de donnée est lue en mémoire à chaque fois qu'une donnée de comparaison CP1-CP4 est calculée, pour obtenir une plus grande sécurité, sachant qu'une attaque peut perturber l'une des lectures de l'une des données à comparer D1, D2, effectuées aux étapes S20, S21, S30, S31, S40, S41 et S50, S51, mais bien plus difficilement toutes les lectures de ces données. Bien entendu, si une moindre sécurité est requise, ou bien si l'on souhaite limiter les accès à la mémoire MEM ou moins pénaliser les temps d'exécution, une seule lecture en mémoire de chaque donnée à comparer D1, D2 peut être effectuée pour obtenir toutes les variables de comparaison CP1-CP4 devant être calculées. Bien entendu, si l'une des données à comparer est une valeur immédiate, elle ne provient pas d'une mémoire de donnée et donc ne peut pas être lue dans une telle mémoire à chaque calcul d'une variable de comparaison.

Les figures 6A, 6B représentent des étapes des fonctions de vérification de cohérence, qui sont exécutées à la suite de l'activation de l'indicateur FLT (étape S3) ou FLF (étape S5), selon des modes de réalisation. Les étapes de la figure 6A sont exécutées lorsque l'indicateur FLT est activé à l'étape S3, c'est-à-dire lorsque les données D1 et D2 sont considérées égales à l'étape S1. Les étapes de la figure 6A comprennent une étape S55 de combinaison logique CB d'au moins une partie des variables de comparaison CP1-CP4 déterminées par les séquences de comparaison SCP1-SCP4, puis une étape S56 de test de du résultat CC de cette combinaison. Si le résultat CC de cette combinaison n'est pas cohérent avec le fait que l'indicateur FLT a été levé, le signal d'erreur ER est activé à l'étape S57.

La séquence de contrôle de la figure 6B est exécutée lorsque l'indicateur FLF est activé à l'étape S5, c'est-à-dire lorsque les données D1 et D2 sont considérées différentes à l'étape S1. La séquence de contrôle comprend une étape S60 de combinaison logique CB d'au moins une partie des variables de comparaison CP1-CP4 déterminées par les séquences de comparaison SCP1-SCP4, puis une étape S61 de test de du résultat CC de cette combinaison. Si le résultat CC de cette combinaison n'est pas cohérent avec le fait que l'indicateur FLF a été levé, le signal d'erreur ER est activé à l'étape S62. A noter que les variables de comparaison CP1-CP4 peuvent être testées séparément aux étapes S56 et S61 au lieu d'être préalablement combinées par des opérations logiques.

La combinaison logique des variables de comparaison CP1-CP4 effectuée aux étapes S55 et S60 peut comprendre une étape de vérification de la cohérence entre ces variables, par exemple en vérifiant que la combinaison CP3 ET (-CP4) est égale à la variable CP1 et/ou CP2.

Grâce à ces dispositions, si un attaquant perturbe l'exécution de l'étape S1 pour forcer l'exécution d'une branche du test réalisé à cette étape, cette attaque sera détectée à l'étape S56 ou S60 qui est exécutée lorsque l'indicateur FLT ou FLT est activé. Ainsi, pour qu'une attaque ne soit pas détectée, il faut non seulement perturber l'exécution de l'étape S1, mais également perturber les calculs des variables de comparaison CP1-CP4 pour obtenir des valeurs cohérentes de ces variables avec la perturbation de l'exécution de l'étape S1, ou bien perturber le test de vérification effectué à l'étape S56 ou S61. Or les attaques telles que celles réalisées avec un faisceau laser sont effectuées avec une précision insuffisante pour pouvoir atteindre de manière systématique un objectif particulier. Il apparaît donc très difficile de perturber de manière cohérente l'exécution de l'étape S1 et les calculs des variables de comparaison CP1-CP4.

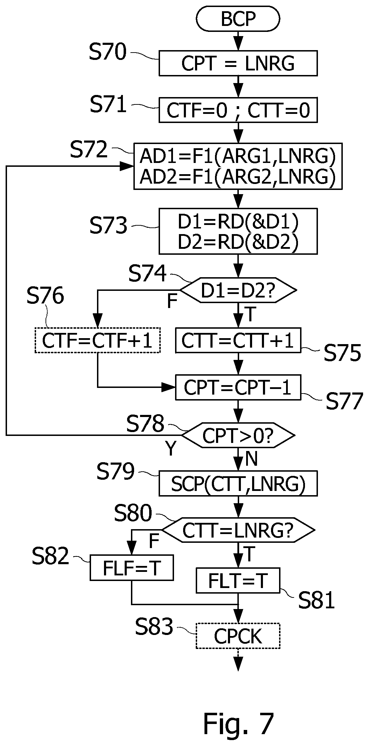

Selon un mode de réalisation, les données D1 et D2 à comparer sont des blocs de plusieurs mots, qui nécessitent pour être comparés, d'effectuer une comparaison mot par mot. La figure 7 représente des étapes S70 à S83 d'une procédure BCP de comparaison de deux blocs de plusieurs mots. Les étapes S70 à S74 sont exécutées successivement. A l'étape S70, un compteur CPT reçoit une valeur de taille de bloc en nombre de mots dans les deux blocs à comparer. La valeur chargée dans le compteur CPT est par exemple lue dans un registre LNRG. A l'étape S71, des compteurs CTF, CTT sont initialisés à 0. L'étape S72 consiste à charger des variables AD1, AD2 avec des adresses de mots à lire dans les deux blocs à comparer. Les valeurs chargées dans les variables AD1 et AD2 peuvent être déterminées à l'aide d'une fonction F1 appliquée aux adresses de début de blocs et à la taille des blocs à comparer. Les adresses de début des deux blocs à comparer peuvent être lues dans des registres ARG1, ARG2. La fonction F1 peut être une simple fonction d'incrémentation à partir des adresses précédemment fournies par la fonction F1 en commençant par les adresses de début des blocs à comparer. La fonction F1 peut combiner une fonction de sélection aléatoire ou pseudo-aléatoire du rang d'un mot dans chaque bloc, en tenant compte de la taille des blocs et des rangs précédemment sélectionnés, et une fonction de détermination de l'adresse du mot à lire et à comparer en fonction du rang sélectionné et de l'adresse de début du bloc.

A l'étape S73, des mots D1, D2 figurant aux adresses AD1, AD2 déterminées à l'étape S72, sont lues dans la mémoire MEM. A l'étape S74, les mots D1 et D2 lus à l'étape S73 sont comparés. L'étape S75 ou S76 est exécutée selon que les mots D1 et D2 sont égaux ou non. A l'étape S75, le compteur CTT comptabilisant le nombre de mots égaux dans les blocs comparés est incrémenté. A l'étape S76, le compteur CTF comptabilisant le nombre de mots différents dans les blocs comparés est incrémenté. A noter que l'étape S76 est optionnelle. A l'étape S77 qui suit les étapes S75 et S76, le compteur CPT est décrémenté. A l'étape S78, le compteur CPT est comparé à 0 et s'il est supérieur à 0, l'exécution de la procédure BCP est poursuivie à l'étape S72. Les étapes S79 et S80 sont exécutées à la suite de l'étape S78, lorsque le compteur CPT a atteint la valeur 0. Tous les mots des deux blocs sont alors censés avoir été comparés. A l'étape S79, la fonction SCP est appelée pour comparer le compteur CTT au nombre de données LNRG dans les blocs à comparer. A l'étape S80, le compteur CTT est comparé directement au nombre de mots LNRG dans chacun des blocs à comparer. L'étape S81 ou S82 est exécutée selon que les deux nombres CTT et LNRG sont identiques ou différents. S'ils sont identiques, cela signifie que les deux blocs à comparer sont identiques. L'étape S81 consiste donc à activer l'indicateur FLT et à exécuter la fonction de vérification de cohérence entre les variables de comparaison calculées à l'étape S79 et la valeur de l'indicateur FLT. L'étape S82 consiste à activer l'indicateur FLF et à exécuter la fonction de vérification de cohérence entre les variables de comparaison calculées à l'étape S79 et la valeur de l'indicateur FLT.

Les étapes S81 et S82 peuvent être suivies de l'étape S83. La fonction CPCK appelée à l'étape S83 peut contrôler notamment que la somme des compteurs CTT et CTF est égale à la taille des blocs à comparer LNRG. Le compteur CTF peut également être contrôlé de la même manière qu'aux étapes S79 à S82, sachant qu'il doit être nul si le compteur CTT est égal à la taille des blocs de données à comparer. Par ailleurs, seul le compteur CTF peut être calculé et contrôlé si les deux blocs à comparer sont censés ne jamais être égaux.

Le test de comparaison de chaque mot des deux blocs à comparer, effectué à l'étape S74 peut être également contrôlé comme précédemment en appelant la fonction SCP avant le test de comparaison et les fonctions d'activation des indicateurs FLT et FLF selon le résultat de la comparaison.

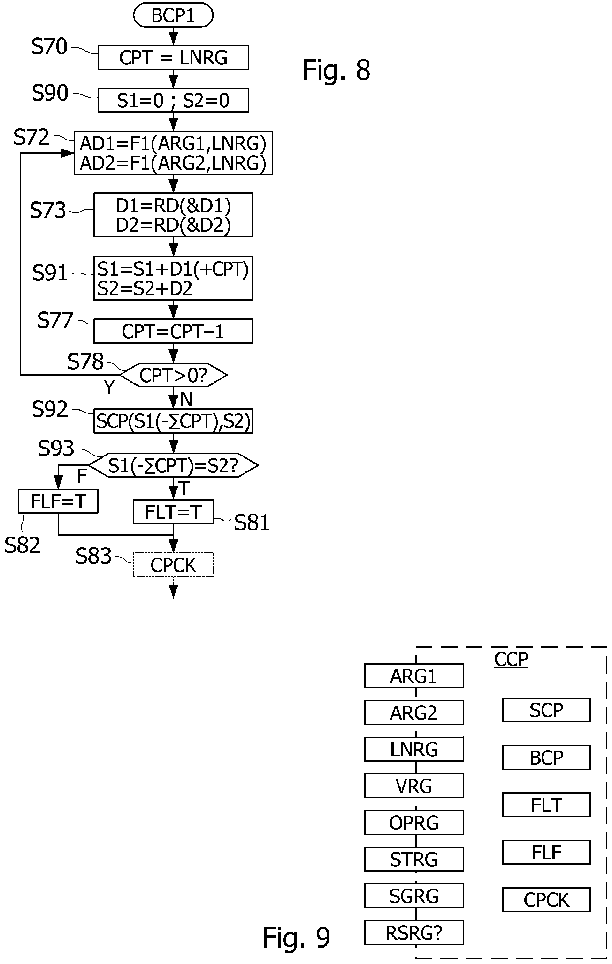

La figure 8 représente une variante BCP1 de la procédure BCP de la figure 7. La procédure BCP1 comprend les étapes S70, S72, S73, S77, S78 et S81 à S83, ainsi que des étapes S90 à S93. L'étape S90 est exécutée au début de la procédure BCP1 pour initialiser à 0 des sommes S1, S2, par exemple entre les étapes S70 et S72. L'étape S91 est exécutée entre les étapes S73 et S77. A l'étape S91, les données lues à l'étape S73 sont ajoutées respectivement aux sommes S1, S2. La valeur du compteur CPT peut également être ajoutée à l'une des deux sommes S1, S2 (à S1 dans l'exemple de la figure 8). Les étapes S92, S93 sont exécutées à la suite de l'étape S78. A l'étape S92, la fonction SCP est appelée pour comparer les deux sommes S1, S2. Les sommes S1, S2 sont identiques si les blocs à comparer sont identiques. En revanche, les sommes S1, S2 peuvent être identiques même si les blocs à comparer sont différents. Par conséquent, l'égalité des sommes S1, S2 n'est pas un critère suffisant pour déterminer si les blocs à comparer sont identiques. A l'étape S93, les sommes S1, S2 sont comparées directement. L'étape S81 ou S82 est exécutée selon que les deux sommes S1, S2 sont identiques ou différentes. Les étapes S81 et S82 peuvent être suivies de l'étape S83.

Selon un mode de réalisation, la valeur du compteur CPT est également ajoutée à chaque itération à l'une des deux sommes S1, S2 (à S1 dans l'exemple de la figure 8), à l'étape S91. La somme des valeurs successives du compteur CPT est donc retranchée de la somme concernée (S1) avant l'exécution des étapes S92 et S93, sachant que la somme des valeurs successives du compteur CPT est égale à LNRG x (LNRG+1)/2. Ainsi, si l'une des itérations de comparaison n'a pas été exécutée ou a été exécutée deux fois, la valeur ainsi retranchée de la somme S1 ne correspond pas aux valeurs du compteur CPT qui ont été ajoutées à cette somme et les blocs seront considérés comme différents. De cette manière, il est possible de contrôler que tous les mots des blocs ont été comparés si les sommes S1, S2 sont identiques.

La procédure BCP ou BCP1 peut être mise en œuvre totalement par le circuit CCP, ou seulement lorsqu'il s'agit de comparer deux données, comme à l'étape S74, S80 ou S93.

Selon un mode de réalisation, les procédures BCP ou BCP1 sont exécutées simultanément ou l'une après l'autre. Les résultats de comparaison fournis par ces deux procédures sont ensuite comparés, et le signal d'erreur ER peut être activé si les résultats de comparaison sont différents.

La figure 9 représente le circuit CCP, selon un mode de réalisation. Le circuit CCP comprend des circuits permettant d'assurer les fonctions décrites précédemment de comparaison sécurisée SCP, de levée des indicateurs FLT et FLF avec vérification de cohérence, et éventuellement de comparaison de bloc BCP, et de vérification CPCK de la bonne exécution d'un test. Le circuit CCP peut également comprendre des registres d'entrée/sortie tels que :
- les registres d'adresse ARG1, ARG2 des données ou des blocs à comparer,
- le registre de taille de bloc à comparer LNRG, fixé à 1 si seulement deux données sont à comparer (bloc comprenant un seul mot),
- un registre VRG pouvant recevoir une valeur à comparer avec une donnée dont l'adresse est indiquée par le registre ARG1,
- un registre de commande OPRG, et
- un registre d'état STRG.

Le registre de commande OPRG peut par exemple prendre les valeurs suivantes :
- 01 pour activer la fonction de comparaison de données SCP ou de bloc BCP, appliquée à deux données ou blocs situés aux adresses spécifiées dans les registres ARG1, ARG2, et dont la taille est spécifiée dans le registre LNRG, la fonction SCP étant activée si la valeur contenue dans le registre LNRG est égale à 1,
- 02 pour activer la fonction SCP pour comparer une donnée à l'adresse ARG1 avec une valeur fournie dans le registre VRG,
- 03 pour activer la fonction de vérification CPCK,
- 04 pour activer l'indicateur FLT et vérifier la cohérence de cette activation avec les valeurs de comparaison calculées par la fonction SCP ou BCP, et
- 05 pour activer l'indicateur FLF et vérifier la cohérence de cette activation avec les valeurs de comparaison calculées par la fonction SCP ou BCP.

Le registre d'état peut par exemple fournir les valeurs des variables de comparaison CP1-CP4.

Il apparaîtra clairement à l'homme de l'art que la présente invention est susceptible de diverses variantes de réalisation et diverses applications. En particulier, l'invention n'est pas nécessairement réalisée à l'aide d'un coprocesseur spécialisé. En effet, les fonctions décrites, remplies par le circuit CCP peuvent être réalisées sous la forme de fonctions programmées appelées par le processeur PRC. L'activation du signal ER peut être réalisée par exemple en levant une interruption ou une exception du processeur PRC.

## Revendications

1. Procédé de sécurisation de l'exécution d'un programme par un processeur, le programme comprenant une instruction de comparaison (S1) de deux données (D1, D2), suivie d'une opération du programme (SI2, SI2-1, SI2-2) sélectionnée en fonction d'un résultat de comparaison fourni par l'instruction de comparaison, le procédé comprenant des étapes consistant à :
avant l'exécution de l'instruction de comparaison, calculer (S2) de différentes manières des données de comparaison (CP1-CP4) représentatives de l'égalité des données à comparer,
après l'exécution de l'instruction de comparaison, vérifier (S3; S5) si les données de comparaison calculées sont cohérentes entre elles et avec le fait que l'opération soit sélectionnée ou non sélectionnée, et
activer un signal d'erreur (ER) si les données de comparaison sont incohérentes entre elles ou avec le résultat de la comparaison.

2. Procédé selon la revendication 1, dans lequel le programme comprend une série d'instructions (SI3) exécutées après l'instruction de comparaison, quel que soit le résultat de la comparaison (S1), le procédé comprenant, avant l'exécution de la série d'instructions, une étape de vérification (S4: CPCK) de la cohérence entre les données de comparaison (CP1-CP4) et le fait que l'opération soit sélectionnée ou non sélectionnée en fonction du résultat de la comparaison.

3. Procédé selon la revendication 1, dans lequel l'instruction de comparaison (S1) est suivie de deux opérations du programme (SI2-1, SI2-2) sélectionnées respectivement si l'instruction de comparaison détermine que les données à comparer (D1, D2) sont identiques, et si l'instruction de comparaison détermine que les données à comparer sont différentes, l'exécution de l'une ou l'autre des deux opérations du programme étant suivie d'une vérification (S4: CPCK) de la cohérence entre les données de comparaison calculées (CP1-CP4) et l'opération sélectionnée en fonction du résultat de la comparaison.

4. Procédé selon l'une des revendications 1 à 3, dans lequel les données de comparaison (CP1-CP4) comprennent au moins deux des données de comparaison suivantes :
une première donnée binaire de comparaison (CP1) dont la valeur est fonction de l'égalité des données à comparer (D1, D2),
une seconde donnée binaire de comparaison (CP2) égale à une combinaison des bits d'un premier mot binaire (XS2) résultant d'une opération logique OU, le premier mot binaire résultant d'une combinaison bit par bit des données à comparer par une opération logique OU Exclusif,
une troisième donnée binaire de comparaison (CP3) égale à une combinaison des bits d'un second mot binaire (XS3) résultant d'une opération logique ET, le second mot binaire résultant d'une combinaison bit par bit par une opération logique OU d'une des données à comparer avec le complément binaire à un de l'autre des données à comparer, et
une quatrième donnée binaire de comparaison égale à une combinaison des bits d'un troisième mot binaire (XS4) résultant d'une opération logique OU, le troisième mot binaire résultant d'une combinaison bit par bit par une opération logique ET d'une des données à comparer avec le complément binaire à un de l'autre des données à comparer.

5. Procédé selon la revendication 4, dans lequel au moins l'une des données à comparer (D1, D2) est lue dans une mémoire (MEM) à chaque calcul d'une donnée de comparaison (CP1-CP4).

6. Procédé selon l'une des revendications 1 à 5, comprenant l'activation d'au moins un indicateur parmi un premier indicateur (FLT) si les données comparées sont identiques et un second indicateur (FLF) si les données comparées sont différentes.

7. Procédé selon l'une des revendications 1 à 6, dans lequel les données à comparer sont des blocs de plusieurs mots, chaque mot d'un des blocs à comparer étant comparé individuellement avec un mot correspondant de l'autre des blocs à comparer, le procédé comprenant une étape de comptage du nombre de mots égaux entre les deux blocs à comparer, l'instruction de comparaison comparant le nombre de mots égaux entre les deux blocs à comparer au nombre de mots dans chaque bloc à comparer.

8. Procédé selon la revendication 7, comprenant des étapes de comptage du nombre de mots différents entre les deux blocs à comparer, et de vérification que la somme du nombre de mot égaux et du nombre de mots différents entre les deux blocs à comparer est égale au nombre de mots dans chaque bloc à comparer.

9. Procédé selon l'une des revendications 1 à 8, dans lequel les données à comparer sont des blocs de plusieurs mots, chaque mot d'un des blocs à comparer étant comparé individuellement avec un mot correspondant de l'autre des blocs à comparer, le procédé comprenant des étapes de calcul d'une somme des mots de chaque bloc à comparer, l'instruction de comparaison comparant les sommes des mots de chaque bloc à comparer.

10. Procédé selon la revendication 9, dans lequel une première des sommes de mots d'un des blocs à comparer inclut des valeurs successives d'un compteur des mots du bloc, le procédé comprenant des étapes de calcul de la somme des valeurs successives du compteur de mots à partir du nombre de mots dans chaque bloc à comparer et de modification de la première somme en lui retranchant la somme calculée des valeurs successives du compteur de mots.

11. Circuit de sécurisation de l'exécution d'un test dans un programme exécuté par un processeur, le circuit étant configuré pour mettre en œuvre le procédé de sécurisation selon l'une des revendications 1 à 10.

12. Produit-programme informatique comprenant des instructions qui lorsqu'elles sont exécutées par un processeur mettent en œuvre le procédé selon l'une des revendications 1 à 10.

## Patentansprüche

1. Verfahren zum Sichern der Ausführung eines Programms durch einen Prozessor, wobei das Programm einen Befehl (S1) zum Vergleichen zweier Daten (D1, D2) aufweist, gefolgt von einer Operation des Programms (SI2, SI2-1, SI2-2), die in Abhängigkeit von einem durch den Vergleichsbefehl gelieferten Vergleichsergebnis ausgewählt wird, wobei das Verfahren die folgenden Schritte umfasst:
vor Ausführung des Vergleichsbefehls, Berechnen (S2), auf verschiedene Weise, von Vergleichsdaten (CP1-CP4), die für die Gleichheit der zu vergleichenden Daten repräsentativ sind, nach Ausführung des Vergleichsbefehls, Prüfen (S3; S5), ob die berechneten Vergleichsdaten miteinander und mit der Tatsache, ob die Operation ausgewählt ist oder nicht, konsistent sind, und Aktivieren eines Fehlersignals (ER), wenn die Vergleichsdaten untereinander oder mit dem Ergebnis des Vergleichs inkonsistent sind.

2. Verfahren nach Anspruch 1, wobei das Programm eine Reihe von Befehlen (SI3) umfasst, die nach dem Vergleichsbefehl ausgeführt werden, unabhängig vom Ergebnis des Vergleichs (S1), wobei das Verfahren vor der Ausführung der Befehlsreihe einen Schritt der Überprüfung (S4: CPCK) der Konsistenz zwischen den Vergleichsdaten (CP1-CP4) und ob die Operation in Abhängigkeit vom Ergebnis des Vergleichs ausgewählt wird oder nicht, umfasst.

3. Verfahren nach Anspruch 1, wobei auf den Vergleichsbefehl (S1) zwei Programmoperationen (SI2-1, SI2-2) folgen, die jeweils ausgewählt werden, wenn der Vergleichsbefehl bestimmt, dass die zu vergleichenden Daten (D1, D2) identisch sind, und wenn der Vergleichsbefehl bestimmt, dass die zu vergleichenden Daten unterschiedlich sind, wobei sich an die Ausführung einer der beiden Programmoperationen eine Prüfung (S4: CPCK) der Konsistenz zwischen den berechneten Vergleichsdaten (CP1-CP4) und der entsprechend dem Ergebnis des Vergleichs ausgewählten Operation anschließt.

4. Verfahren nach einem der Ansprüche 1 bis 3, wobei die Vergleichsdaten (CP1-CP4) mindestens zwei der folgenden Vergleichsdaten umfassen:
ein erstes binäres Vergleichsdatenelement (CP1), dessen Wert eine Funktion der Gleichheit der zu vergleichenden Daten (D1, D2) ist, ein zweites binäres Vergleichsdatenelement (CP2), das gleich einer Kombination der Bits eines ersten Binärwortes (XS2) ist, die aus einer logischen ODER-Operation resultiert, wobei das erste Binärwort sich aus einer Bit-für-Bit-Kombination der zu vergleichenden Daten durch eine logische Exklusiv-ODER-Verknüpfung ergibt, ein drittes Vergleichsbinärdatenelement (CP3), das gleich einer Kombination der Bits eines zweiten Binärworts (XS3) ist, das sich aus einer logischen UND-Verknüpfung ergibt, wobei das zweite Binärwort aus einer Bit-für-Bit-Kombination durch eine logische ODER-Verknüpfung von einem der zu vergleichenden Daten mit dem zueinander komplementären Bit der zu vergleichenden Daten resultiert, und einen vierten binären Vergleichsdatenwert, der gleich einer Kombination der Bits eines dritten Binärworts (XS4) ist, das aus einer logischen ODER-Verknüpfung resultiert, wobei das dritte Binärwort aus einer Bit-für-Bit-Kombination durch eine logische UND-Verknüpfung von einem der zu vergleichenden Daten mit dem zueinander komplementären Bit der zu vergleichenden Daten resultiert.

5. Verfahren nach Anspruch 4, wobei jedes Mal, wenn ein Vergleichsdatenelement (CP1-CP4) berechnet wird, mindestens eines der zu vergleichenden Daten (D1, D2) aus einem Speicher (MEM) ausgelesen wird.

6. Verfahren nach einem der Ansprüche 1 bis 5, umfassend das Aktivieren mindestens eines ersten Flags (FLT), wenn die zu vergleichenden Daten identisch sind, und eines zweiten Flags (FLF), wenn die zu vergleichenden Daten unterschiedlich sind.

7. Verfahren nach einem der Ansprüche 1 bis 6, wobei die zu vergleichenden Daten Blöcke aus mehreren Wörtern sind, wobei jedes Wort in einem der zu vergleichenden Blöcke einzeln mit einem entsprechenden Wort in dem anderen der zu vergleichenden Blöcke verglichen wird, wobei das Verfahren einen Schritt des Zählens der Anzahl gleicher Wörter zwischen den zwei zu vergleichenden Blöcken umfasst, wobei der Vergleichsbefehl die Anzahl gleicher Wörter zwischen den zwei zu vergleichenden Blöcken mit der Anzahl von Wörtern in jedem zu vergleichenden Block vergleicht.

8. Verfahren nach Anspruch 7, umfassend die Schritte des Zählens der Anzahl unterschiedlicher Wörter zwischen den beiden zu vergleichenden Blöcken und des Verifizierens, dass die Summe der Anzahl gleicher Wörter und der Anzahl unterschiedlicher Wörter zwischen den beiden zu vergleichenden Blöcken gleich der Anzahl der Wörter in jedem zu vergleichenden Block ist.

9. Verfahren nach einem der Ansprüche 1 bis 8, wobei die zu vergleichenden Daten Blöcke aus mehreren Wörtern sind, wobei jedes Wort in einem der zu vergleichenden Blöcke einzeln mit einem entsprechenden Wort in dem anderen der zu vergleichenden Blöcke verglichen wird, wobei das Verfahren die folgenden Schritte umfasst: Berechnen einer Summe der Wörter in jedem zu vergleichenden Block, wobei der Vergleichsbefehl die Summen der Wörter in jedem zu vergleichenden Block vergleicht.

10. Verfahren nach Anspruch 9, wobei eine erste der Summen von Wörtern in einem der zu vergleichenden Blöcke aufeinanderfolgende Werte eines Zählers der Wörter in dem Block enthält, wobei das Verfahren die folgenden Schritte umfasst: Berechnen der Summe der aufeinanderfolgenden Wortzählerwerte aus der Anzahl von Wörtern in jedem zu vergleichenden Block und Modifizieren der ersten Summe durch Subtrahieren der berechneten Summe der aufeinanderfolgenden Wortzählerwerte davon.

11. Schaltung zum Sichern der Ausführung eines Tests in einem von einem Prozessor ausgeführten Programm, wobei die Schaltung konfiguriert ist, um das Sicherungsverfahren nach einem der Ansprüche 1 bis 10 umzusetzen.

12. Computerprogrammprodukt, umfassend Befehle, die bei ihrer Ausführung durch einen Prozessor den Prozess nach einem der Ansprüche 1 bis 10 umsetzen.

## Claims

1. Method for securing the execution of a program by a processor, the program comprising a comparison instruction (S1) of two data items (D1, D2), followed by an operation of the program (SI2, SI2-1, SI2-2) selected according to a comparison result provided by the comparison instruction, the method comprising the steps of:
before the execution of the comparison instruction, calculating (S2), in different ways, comparison data items (CP1-CP4) representative of the equality of the data to be compared;
after the execution of the comparison instruction, verifying (S3; S5) whether the calculated comparison data items are consistent with one another and with whether the operation is selected or not; and
activating an error signal (ER) if the comparison data items are inconsistent with one another or with the result of the comparison.

2. Method according to claim 1, wherein the program comprises a series of instructions (SI3) executed after the comparison instruction, regardless of the result of the comparison (S1), the method comprising, before the execution of the series of instructions, a step of verifying (S4: CPCK) the consistency between the comparison data items (CP1-CP4) and whether the operation is selected or not according to the result of the comparison.

3. Method according to claim 1, wherein the comparison instruction (S1) is followed by two program operations (SI2-1, SI2-2) selected respectively if the comparison instruction determines that the data items to be compared (D1, D2) are identical and if the comparison instruction determines that the data items to be compared are different, the execution of one or the other of the two program operations being followed by verifying (S4: CPCK) the consistency between the calculated comparison data items (CP1-CP4) and the selected operation according to the result of the comparison.

4. Method according to any of claims 1 to 3, wherein the comparison data items (CP1-CP4) comprise at least two of the following comparison data items:
a first binary comparison data item (CP1), the value of which depends on the equality of the data items to be compared (D1, D2);
a second binary comparison data item (CP2) equal to a combination of the bits of a first binary word (XS2) resulting from a logical OR operation, the first binary word resulting from a bit by bit combination of the data items to be compared by a logical exclusive OR operation;
a third binary comparison data item (CP3) equal to a combination of the bits of a second binary word (XS3) resulting from a logical AND operation, the second binary word resulting from a bit by bit combination by a logical OR operation of one of the data items to be compared with the binary complement to one of the other data items to be compared; and
a fourth binary comparison data item equal to a combination of the bits of a third binary word (XS4) resulting from a logical OR operation, the third binary word resulting from a bit by bit combination by a logical AND operation of one of the data items to be compared with the binary complement to one of the other data items to be compared.

5. Method according to claim 4, wherein at least one of the data items to be compared (D1, D2) is read from a memory (MEM) at each calculation of a comparison data item (CP1-CP4).

6. Method according to any of claims 1 to 5, comprising the activation of at least one indicator from a first indicator (FLT) if the compared data items are identical and a second indicator (FLF) if the compared data items are different.

7. Method according to any of claims 1 to 6, wherein the data items to be compared are blocks of a plurality of words, each word of one of the blocks to be compared being compared individually with a corresponding word of the other of the blocks to be compared, the method comprising a step of counting the number of equal words between the two blocks to be compared, the comparison instruction comparing the number of equal words between the two blocks to be compared with the number of words in each block to be compared.

8. Method according to claim 7, comprising the steps of counting the number of different words between the two blocks to be compared, and of verifying that the sum of the number of equal words and the number of different words between the two blocks to be compared is equal to the number of words in each block to be compared.

9. Method according to any of claims 1 to 8, wherein the data items to be compared are blocks of a plurality of words, each word of one of the blocks to be compared being compared individually with a corresponding word of the other of the blocks to be compared, the method comprising the steps of calculating a sum of the words of each block to be compared, the comparison instruction comparing the sums of the words of each block to be compared.

10. Method according to claim 9, wherein a first of the sums of words of one of the blocks to be compared includes successive values of a counter of the words of the block, the method comprising the steps of calculating the sum of the successive values of the word counter from the number of words in each block to be compared and modifying the first sum by subtracting from it the calculated sum of the successive values of the word counter.

11. Circuit for securing the execution of a test in a program executed by a processor, the circuit being configured to implement the securing method according to any of claims 1 to 10.

12. Computer program product comprising instructions which, when they are executed by a processor, implement the method according to any of claims 1 to 10.
